# EUROPEAN PATENT APPLICATION

(11) **EP 1 734 442 A1**
(43) Date of publication of application: **20.12.2006**
(21) Application number: 05104289.3
(22) Date of filing: 19.05.2005
(51) Int. Cl.: G06F 9/44

(54) **Modular code generation**

(71) Applicant: Agilent Technologies, Inc., Palo Alto, CA 94306 (US)
(72) Inventor: SCHROTH, Albrecht, 71083, Herrenberg (DE); FUNKE-SCHAEFF, Sabine, 71134, Aidlingen-Dachtel (DE)
(74) Representative: Zinkler, Franz

(57) **Abstract**

A data processing device (100) for automatically generating executable code for performing an application in accordance with a user-defined description (300) of the application, wherein the data processing device (100) comprises a generation unit (108) which is adapted to generate the code by combining, in accordance with the user-defined description (300) of the application, compiled code blocks.

## Description

### BACKGROUND ART

The present invention relates to code generation.

For processing or sequence control of a machine, the machine may be controlled by means of software. For instance, for testing electronic devices, in particular integrated electronic circuits providing digital electrical output signals, a test or stimulus signal is fed to an input of the device under test, and a response signal of the device under test is evaluated by an automatic test equipment, for example by comparison with expected data. Such an automatic test equipment has included a particular test functionality, that it to say test functions or routines which the test equipment may carry out. This test functionality may be incorporated in the test equipment in the form of executable software code (for instance object code).

When a new measurement apparatus, for instance a test apparatus for testing a device under test (DUT), is being developed, software source code has to be developed line by line by a human programmer. After a compilation of the source code for generating executable code, the latter can be executed in the developed test apparatus for providing and controlling the functionality of the test apparatus, for instance for carrying out a test in accordance with a particular test scheme.

### DISCLOSURE OF THE INVENTION

It is an object of the invention to provide an improve code generation. The object is solved by the independent claims. Exemplary embodiments are shown by the dependent claims.

According to an exemplary embodiment of the invention, a data processing device for automatically generating executable code for performing an application in accordance with a user-defined description of the application is provided. The data processing device may comprise a generation unit which may be adapted to generate the code by combining, in accordance with the user-defined description of the application, compiled code blocks.

According to another exemplary embodiment of the invention, a method of automatically generating executable code for performing an application in accordance with a user-defined description of the application is provided. The method may comprise the step of generating the code by combining, in accordance with the user-defined description of the application, compiled code blocks.

According to still another exemplary embodiment of the invention, a computer-readable medium is provided, in which a computer program of automatically generating executable code for performing an application in accordance with a user-defined description of the application may be stored. When the computer program is executed by a processor, the above mentioned method step may be controlled or carried out.

According to yet another exemplary embodiment of the invention, a program element of automatically generating executable code for performing an application in accordance with a user-defined description of the application is provided. When the program element is executed by a processor, the above mentioned method step may be controlled or carried out.

Embodiments of the invention can be partly or entirely embodied or supported by one or more suitable software programs, which can be stored on or otherwise provided by any kind of data carrier, and which might be executed in or by any suitable data processing unit. The code generation according to the invention can be realized by a computer program, i.e. by software, or by using one or more special electronic optimization circuits, i.e. in hardware, or in hybrid form, i.e. by means of software components and hardware components.

The term "application" may particularly denote any function in the real world which shall be provided or developed. Such an application may, for instance, be a machine which can be used for a special purpose. For example, testing a device under test corresponding to a specially defines test scheme may be such an application. Or, controlling a heating sequence of a toaster to optimize taste and health compatibility of toasted bread may be such a functionality.

The term "executable code" may particularly denote any kind of code which can directly, that is to say without any compilation procedure, executed by a machine like a computer or a microprocessor of an apparatus. Examples of executable code is object code or code which is directly interpretable by an interpreting instance.

The term "user-defined description of the application" may particularly denote any program structure defined in general terms by a human being describing an application to be realized. Such a description should be in accordance with a particular syntax understandable by the generation unit. In other words, the description bridges the barrier between human language and machine language and should thus have a clear an unambiguous structure and nomenclature.

The term "compiled code blocks" may particularly denote any unspecific program element which is already brought in a format to be directly executable by a machine. Such pre-compiled code blocks are elements of a more sophisticated and a more specialized software program. The property "compiled" may ensure that no further translation of the compiled code blocks in a machine language is necessary.
The compiled code blocks may thus be understood to be black boxes which may (only) carry out an intrinsic routine to generate an output from an input in accordance with an elementary function assigned to a particular code block.

The features according to an exemplary embodiment of the invention may particularly have the advantage that a system of automatically generating executable software code may be provided which may generate the executable code based on a description of a corresponding application definable by a human user in an intuitive manner. Based on a user-defined specification of a program sequence to be developed, a machine may then automatically generate corresponding executable software code.

Particularly, the user-defined description of the manner of linking basic building blocks may first be converted in a more formalized description (for instance an XML file). Such a formalized description is a first step to the generation of executable code and bundles pre-compiled software blocks in accordance with a definition of parameters. An engine may then automatically generate the executable code, for instance object code (more particularly a sequence of logical values "0" and "1" directly executable by a machine) by synthesizing the compiled blocks to form code which has no descriptive commands left, but is directly executable. Such an engine may directly read-in the formalized description and may construct the executable code.

Embodiments of the invention may be particularly implemented in any kind of processing or sequence control of a machine, so that the machine may be controlled by means of software which may be generated automatically.

In case that a modification of the executable code is desired, a user may directly access (for instance using an editor) the user-defined description (for instance a modular construction set accessible via a GUI) or the formalized description (for instance an XML file) and may selectively alter particular parts of the program sequence and/or of the links to particular building blocks and/or may alter particular parameters. The software engine may then generate the updated executable code based on the selectively modified description.

Exemplary actions of the engine may include interpreting an XML file as the formalized description, binding together pre-compiled building blocks, and generating executable code based thereon. Such an engine may further have an interface via which the generated executable code may be executed.

By taking these measures, human efforts required for software development can be significantly reduced. It may be sufficient to describe a program to be generated in a language close to a language or gesture which may be used, understood or handled easily by human beings. Thus, only a sequence of functional components of the desired code has to be described by a user. In accordance with such a description, the system according to an embodiment of the invention may then bind together different pre-compiled code blocks (for instance items in object codes) in a manner that the described application can be realized with the structured logical combination of the executable code components. Thus, the automatic generation of software code may be made possible without any restriction concerning performance.

Furthermore, the generated code may be directly executable without the necessity to compile the code before using the code by a machine. This may significantly reduce the amount of human resources needed for creating usable code, and further the time needed for updating or modifying code can be diminished.

In other words, it may be dispensible, according to an embodiment of the invention, that a software program is programmed manually by a human developer "line by line". In contrast to this, already pre-programmed and pre-compiled code blocks may be re-configured or ordered in order to fulfil the application which the human user describing this application has in mind.

Thus, according to one exemplary embodiment of the invention, a computer program may be composed automatically, that is to say by a machine, on the basis of pre-compiled standard modular building blocks. Each of these building blocks may be capable of realizing a particular sub-function in general terms, that is to say in an unspecified manner. By combining single blocks and by specifying their detailed meaning in the context of a special application, the functionality or application which the entire program realizes may be constructed.

Thus, for developing software, a human programmer only has to describe the desired application or function in a verbal or pseudo-verbal manner. Such a user-defined description may define a program sequence, that is to say couple or interconnect functional blocks which the program shall fulfil. Then, executable code blocks which have already been compiled and which may be taken from a program library may be bound together. By taking this measure, directly executable code may be generated without the necessity to compile the generated code. In contrast to this, the generated code may be directly executed as object code or may be interpreted.

As an intermediate step, a formalized description of the user-defined description may be generated, wherein the directly executable code may be derived from the formalized description. Such a formalized description may be an XML file which can be retrieved easily from the user-defined description by an XML editor.

One exemplary embodiment of the invention may particularly have the advantage that software building blocks are combinable independently from a particular hardware or application environment. Further, the jobs and corresponding skills of a hardware developer (usually developing an apparatus to fulfil a special application) and of a software developer (usually developing software components in general terms) may be decoupled so that any human instance may concentrate on its own specialized job. On the one hand, the software programmer may concentrate on efficiently programming the code blocks independently from a particular application, thus dealing with issues like optimizing algorithms or reducing processing times and computational burden. On the other hand, the hardware developer developing a hardware component which shall fulfil the application does not has to care about such topics, but may develop an application-specific scheme to efficiently realize the application. Software and application environment may thus be made independently from one another.

Thus, a modular code generating system may be provided which may significantly simplify and shorten the software development process. It may be no longer necessary that a hardware developer of, for instance, a measurement device which requires control software to perform a particular measurement functionality, learns or uses a particular program language like C++. She or he may simply and intuitively combine basic building blocks to generically define a desired program performance.

A significant advantage of an embodiment of the invention may be that a software program may be generated directly on a console. The system generating the program may run with the full processor velocity.

In contrast to a conventional approach according to which it may been necessary to manually write a program (of, for instance, some 10⁵ lines of program code), only the combination of functional blocks needs to be described by the programmer according to an embodiment of the invention. This may reduce the cycle time for providing the program ready for execution.

According to an exemplary embodiment of the invention, a modification of a readily developed application in the form of available executable code may be accomplished by retrieving or loading the user-defined description and by selectively changing particular blocks, couplings, parameters or inputs defining the application. For instance, a parameter or a coupling between blocks may be modified (for example, a command "provide a test voltage with a peak value of 5V and apply the test voltage to pins 12 and 27" may be changed into "provide a test voltage with a peak value of 3V and apply the test voltage to pins 5 and 18"). This may allow to retrofit an already defined description in an efficient manner. The executable code does neither has to be installed nor has to be compiled but may be directly rendered on a machine.

It is a further advantage of an embodiment of the invention that an already existing executable or executed code implemented on an apparatus performing the corresponding application may be diagnosed from a remote position via a network like the internet. If a problem with the automatically generated executable code occurs at the location of the apparatus (for instance at a client's site), this problem can be diagnosed remotely (for instance from a manufacturer's site) and the description can be modified (for instance by re-writing an XML file as a formalized description or by adjusting the user-defined description via a GUI) to solve the problem or to provide a maintenance service from the remote position. In other words, support can be offered without the requirement to be present at the location of the apparatus. With a few mouse clicks or commands, it may then be possible to generate a modified program and to provide the modified program (for instance via the internet) to the apparatus. Neither at the location of providing the service nor at the location of apparatus, there is any necessity to re-compile the code.

Furthermore, the executed code may run at a remote location (for instance at the site of the manufacturer of a measurement device as the application), whereas the client may be located at another site. Via a computer network, the code or corresponding commands may be transmitted for execution.

For instance, a graphical user interface (GUI) may allow a user to combine, on a screen, building blocks according to the application which the user has in mind. Then, this description may be transferred into a textual file (for instance an XML file) including links to the or incorporating the compiled code blocks. Based on this XML file, an engine may directly generate the executable code in accordance with the description defined therein, so that the desired application may be carried out.

According to one exemplary embodiment of the invention, a modular system is provided which may generate directly executable code which does not has to be compiled before use. Embodiments of the invention may further be capable of separating the system behaviour from the particular application ("aspect-oriented" approach). Consequently, a software developer and a hardware developer may each concentrate on their special skills. Pre-compiled program blocks may then be connected or combined to generate the program ready for execution. A modification of such code is possible on the fly at run time. The generated code may be directly modified, and the code may be directly interpretable or executable.

For instance, a user may select particular blocks at a graphical user interface (GUI), may define interface coupling, and then interpretable code (for instance an XML file) may be generated automatically by simply pressing a button. For updating or modifying the program code, either the description (for instance the coupled blocks or the coupling of the blocks) may be modified. Is also possible to directly modify the generated XML file as interpretable code. The XML file can then be translated into object code by linking the precompiled building blocks. Also these links are then realized as executable code.

Thus, executable or compiled building blocks may be combined in a user-defined manner to generate directly interpretable code. This allows a hardware developer, even without detailed software knowledge, to simply handle or use a construction set of pre-compiled software components and to develop a desired hardware application very fast.

A particular field of application according to the invention is the automatic generation of control software for a measurement apparatus to be developed. Thus, control software for controlling an apparatus may be generated automatically according to an embodiment of the invention. Such code may be used in and may be adapted to control or operate any apparatus providing an application, like a coffeemachine, an integrated circuit test device, a combustion engine, a fluid separation device, a HPLC (High Performance Liquid Chromatography) or the like.

One exemplary embodiment of the invention is related to a descriptive model request broker (which may also be denoted in the following as an engine) which defines - for preconfigured building blocks - input parameters, output parameters and coupling properties so that corresponding object code may be generated by the machine. A directly interpretable code (for instance an XML file) describes the program and its function in a textual manner, but having a particular semantics or syntax. Such a textual description may be transferred into executable or machine-readable code.

One embodiment of the invention is therefore embedded in the concept of descriptive programming.

Traditional programming languages may use a procedural or, in a more modern case, an object oriented approach. An advantage of this more modern approach is that a user may get the chance to relatively easily implement code re-use. Typically, "implementation inheritance " or "delegation" may do this. An issue of a traditional approach is that the complexity of the domain (target environment of an application) is one-to-one reflected within the object model. This may lead to a situation where the software engineer is overwhelmed by the sheer amount of classes needed to handle. Every change within the domain needs to be reflected in the object model (leading to re-compilation, re-debugging, etc.).

According to the approach of descriptive programming, a user may get the chance to implement code relatively easy. Descriptive programming may utilize a description of a program, like XML. The description may separate the actual flow (i.e. program sequence), data and algorithms from each other. A typical description may look like the following:

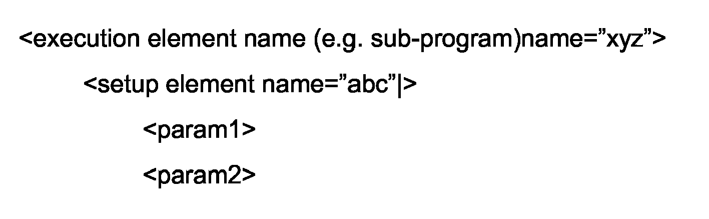

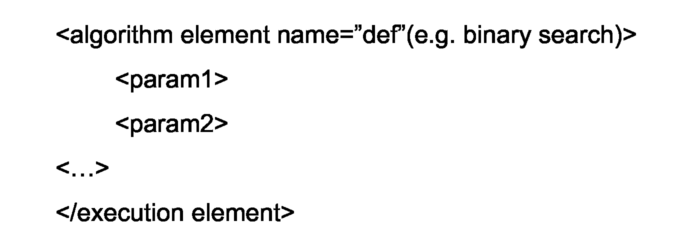

The sequence of elements may describe their actual execution sequence. Every "execution element" may be implemented as an object. These objects may be actually bound at run-time to a certain program (different to code generation). Therefore, there may be no run-time penalties.

An advantage may be a dramatic reaction of complexity (class hierarchy may be reduced) and dependencies within the code and the fact that a programmer no longer needs to keep this complexity in mind. This means that she or he does not have to think about what to derive from where at compile time.

One exemplary embodiment of the invention can be seen in the fact that, for assisting the development of an apparatus like a laboratory apparatus, it may be sufficient that a human being inputs generic data defining the functionality of the apparatus in a descriptive manner. The functionality of the apparatus to be developed may thus be defined in general terms, that is to say in a manner according to a syntax understandable for a human being or close to a human language. The data processing system according to an embodiment of the invention may then automatically generate the executable code by interrelating or linking the different compiled components in accordance with the description.

Particularly, conventional calibration and diagnostic may take much effort in order to implement their functionality for a new hardware. This may lead to a delay of delivery of this new hardware. The reason for this is that functionality is currently programmed to specific hardware.

To overcome such deficiencies, it may be advantageous to take a "configuring instead of programming" approach. This approach may allow the calibration and the diagnostic to quickly implement and/or adapt their functionality to a new hardware, since they will avoid "real coding" meaning a full fletched software development cycle including designing, coding, debugging. Instead, the calibration and diagnostic may be done by using configurable parameters, and by adjusting the parameter values, different calibration and diagnostic steps may be taken. This may be transparent to the user, and the user does not need to understand or be aware of the underlying implementation, but only the list of parameters that can be changed. This could be achieved using a "virtual" machine that may be capable to understand a domain specific language and provides a set of domain specific basic functionality, with parameters that can be changed interactively.

Furthermore, embodiments of the invention may be related to object-oriented aspects. It is possible to define a template of different process portions of a computer program to be generated automatically. For instance, a test procedure for developing a test of a DUT may include a set-up phase, a measurement phase, an analysis phase and a store phase. Such phases may be formulated, ordered and linked in the frame of a template which defines or describes such a process. The template may be provided as a basis for a further specification in accordance with a particular application. Thus, an embodiment of the invention may introduce a polymorphism.

Embodiments of the invention may be advantageously implemented or used by engineers for calibration and diagnosis and/or being responsible for designing individual tests, developers of a calculation step of diagnosis tests, or hardware developers, allowing them to implement a hardware turn-on of a new boards by themselves.

Exemplary application fields of the system according to the invention is the development of new maintenance tests, the development of new hardware, a hardware turn-on use case, remotely deploying of a maintenance test, and performing system maintenance (maintenance use case).

In the following, further exemplary embodiments of the data processing device according to the invention will be described. However, these embodiments also apply for the method of processing data, for the computer-readable medium and for the program element.

The generation unit may be adapted to generate the code by forming a sequence of the compiled code blocks. According to this embodiment, a user may define a desired program sequence by defining links between different building blocks. The system according to an embodiment of the invention may then create a sequence of the precompiled code blocks to realize the executable code.

The device may be adapted to generate the code to be interpretable without prior compilation.

The term "compilation" may particularly denote translating a program that is written in a high level programming language into a machine language program. Such a conversion from source code to machine readable (for instance binary) code may include a large amount of computational burden which may be significantly reduced according to an embodiment of the invention, since the generated software code binds together already pre-compiled building blocks and/or parameter definitions.

An "interpreter" may particularly denote a computer program that executes other programs. "Interpreting" is different from "compiling" which does not execute its input program (the source code) but translates it into executable machine code (also called object code) which may be output to a file for later execution. In other words, an interpreter may be a module that alternatively decodes and executes every statement in some body of code. The code generated according to the described exemplary embodiment of the invention is therefore ready for being interpretable by an interpreter without the necessity to compile the generated code before execution.

Furthermore, the generation unit of the data processing device may be adapted to generate the code based on a sequence of linked items by means of which a user defines a sequence of compiled code blocks, wherein each of the items corresponds to an assigned of the compiled code blocks. According to this exemplary embodiment, a user may define a sequence of code blocks intuitively by defining a sequence of linked items, like connected boxes on a GUI. Thus, a modular system may be provided in which a user may define a sequence of linked items like functional blocks, wherein the data processing device may then identify or select one or more pre-compiled code blocks for each of the items and may combine the items in a predefined manner.

Each of the items may have one or more inputs, wherein each of the inputs may be providable with data and/or may be coupled with an output of another one of the items. A block may be considered to be a relatively unspecified functional module or element, wherein a combination of different blocks may fulfill a more complex function. For specifying a block in accordance with a particular application, inputs or input interfaces may be provided via which parameters or couplings may be defined for a block in a more concrete manner or in a completely concrete manner.

For instance, a block fulfilling the general function "provide a voltage with a particular peak value and apply the voltage to a destination" may be defined, via an input, to fulfill a more concrete function like "provide a test voltage with a peak value defined by the output of the preceding item and apply the test voltage to pins defined by the output of the preceding item", or to fulfill a completely concrete function like "provide a test voltage with a peak value of 5V and apply the test voltage to pins 12 and 27". Thus, the input interface(s) may define the functionality of the corresponding item in accordance with the particular application, for instance in accordance with a particular test routine to be carried out by a test apparatus.

Furthermore, each of the items may have one or more outputs, wherein each of the outputs may be capable of providing data and/or may be coupled with an input of another one of the items. Such an output interface my supply a result of the corresponding item or computational resource to an input of a succeeding item or may provide result data reflecting a result of the application. For instance, a last item of the sequence may provide result data in a format to be directly displayable on a display device.

The device may comprise a user interface adapted to receive a user input as the user-defined description of the application. Via such a user interface, a user may instruct the data processing device to realize the desired function.

Particularly, the user interface may be a graphical user interface (GUI). In other words, the data processing device may comprise a receiving unit for receiving the description defining the functionality of the application and may comprise a display unit for displaying a description under construction or a readily input description. Particularly, such a receiving unit may include a graphical user interface via which a human user may input data. Such a graphical user interface may include a display device (like a cathode ray tube, a liquid crystal display, a plasma device or the like) for displaying information to a human operator, like masks in the form of windows in which input fields may be provided. Such a graphical user interface may further comprise an input device allowing a user to input specification data and/or to provide the system with the user-defined description. Such an input device may include a keypad, a joystick, a trackball or may even include a microphone of a voice recognition system. The GUI may allow a human user to communicate with the system in a bi-directional manner.

The user interface may further be adapted to receive the user input in a manner (for instance a language and/or a view) which is understandable for a human being. The generic data may be input in plaintext or clear text in a manner which is close to a human way of articulation. Furthermore, the data may be input in a graphical way, for instance by movable boxes (reflecting the individual functional building blocks) on a computer window and by connecting the boxes with coupling arrows (defining the relationship and interaction of the individual functional building blocks), or by defining some kind of flow chart of a method to be translated into a computer program. This may enable a human user to input information close to human language, but already pre-structured. This may set the course for a subsequent translation of the description into a formalized description like XML and finally into executable code, that is to say in a machine language.

The generation unit may be adapted to generate, based on the user-defined description, a formalized description comprising links to the compiled code blocks and/or to parameter definitions, wherein the executable code is generated from the formalized description. Thus, before generating the executable code, an interpretable formalized description may be provided in structured form, for instance in a textual manner. Such a structure may comprise, at certain positions, pointers to already compiled sub-routines for fulfilling sub-functions of the application to be developed. A software engine may access this formalized description as a basis for the actual generation of the executable code.

For example, the formalized description may be a file in Extensible Markup Language (XML). XML is a standard for creating Markup Languages which describes the structure of data. It is not a fixed set of elements, like HTML, but rather, it is like SGML (Standard Generalized Markup Language). In that it is a meta language or a language for describing languages, XML may enable authors to define their own text. The invention may benefit from these advantages for the purpose of facilitating the conversion of a description to executable program code.

The executable code may be object code. The term "object code" may particularly denote machine-executable instructions, or a set of processor-readable codes and data.

The device according to the invention may be adapted to generate control code for controlling an apparatus to perform the application. In other words, the software code generated automatically is not restricted to be used on the computer itself, but may be transferred or copied to an apparatus to be developed to serve as a control software for controlling the functionality of this apparatus.

The device may be adapted to generate control code for controlling a measurement apparatus to perform a measurement functionality as the application. The measurement apparatus may be at least one of the group consisting of a test device for testing a device under test, a measurement device for performing a measurement in a coupled measurement environment, a sensor device, a device for chemical, biological and/or pharmaceutical analysis, a fluid separation system adapted for separating components of a fluid, and a liquid chromatography device.

Particularly, the apparatus can be realized as a test device for testing a device under test (DUT). For testing electronic devices, in particular integrated electronic circuits providing digital electronic output signals, a test or stimulus signal may be fed to an input of the DUT, and a response signal of the DUT may be evaluated by automatic test equipment, for example by comparison with the expected data. For carrying out such a test sequence or test routine, a corresponding control software is necessary. A test scheme can be developed by a hardware developer. Then, this test scheme may be formulated as a description. The system according to the invention may then translate the description of the test scheme into executable test routine code. For this purpose, pre-compiled software modules which may have been programmed by a software developer, may be connected in accordance with the description. In this context, parameter definitions may be taken into account. The executable software code may then be copied to a test apparatus to control or regulate the test scheme.

The measurement apparatus can also be any kind of sensor detecting any physical, chemical or other parameter like temperature, humidity, pressure or the like.

In a realization of the measurement apparatus as a device for chemical, biological and/or pharmaceutical analysis, functions like (protein) purification, electrophoresis investigation of solutions, or chromatography investigations may be realized.

According to another exemplary embodiment of the present invention, the apparatus to be designed may be a fluid separation system adapted for separating compounds of a fluid. Such a fluid separation system may comprise a fluid delivering unit adapted for delivering fluid, a separation unit adapted for separating compounds of the fluid and to provide at least one separated component.

According to another exemplary embodiment of the device, a modification unit may be provided for modifying the user-defined description and/or the formalized description to modify the application. A scenario may be present in which a sequence of linked functional items as the description of the program to be generated has been input before (for instance in the frame of the development of another apparatus). This description can be reloaded in the user interface, and a selective modification of individual functions, couplings or parameters may be carried out. This may allow to generate executable code in a simple manner without the necessity to start developing the apparatus from the very beginning or to compile the entire code again. Such a modification may be performed on the level of the user-defined description or on the level of an XML file or the like as a more formal way of describing a program sequence.

The device may comprise or may be capable of accessing a library unit storing a plurality of compiled code blocks, wherein each of the compiled code blocks may be executable to perform an assigned function. Such a library unit or database may thus contain a collection of pieces of pre-compiled software elements for realizing particular functions. For instance, when a measurement apparatus shall be developed, typical measurement functions may be realized by the individual code blocks. Such sub-routines may be adjusted to fit to a particular application, for instance by defining parameters of the sub-routines, by coupling sub-routines or by embedding sub-routines in the environment of a particular application.

The data processing device may be any kind of instance with computational resources. For instance, the data processing device can be a conventional personal computer or can also be a sophisticated server computer or workstation. In principle, it can also be a mobile phone, a personal digital assistant or any other device which allows data processing.

### BRIEF DESCRIPTION OF DRAWINGS

Objects and many of the attendant advantages of embodiments of the present invention will be readily appreciated and become better understood by reference to the following more detailed description of embodiments in connection with the accompanied drawings.

Fig. 1 shows a schematic illustration of a data processing device for automatically generating executable code according to an exemplary embodiment of the invention.

Fig. 2 shows a detailed view of a graphical user interface of a data processing device for automatically generating executable code according to an exemplary embodiment of the invention.

Fig. 3 shows a detailed view of a user-defined building block based description of an application according to an exemplary embodiment of the invention.

Fig. 4 a flow chart of a method of automatically generating executable code according to an exemplary embodiment of the invention.

Fig. 5 shows a network of a data processing device for automatically generating executable code and a remotely located controllable IC test device according to an exemplary embodiment of the invention.

Fig. 6 a flow chart illustrating a development of a maintenance test according to an exemplary embodiment of the invention.

Fig. 7 a flow chart illustrating a development of a new hardware according to an exemplary embodiment of the invention.

Fig. 8 a flow chart illustrating a performance of an engine related to a maintenance system according to an exemplary embodiment of the invention.

Fig. 9 a flow chart illustrating the performance of the engine related to a maintenance system according to the exemplary embodiment of the invention shown in Fig.8.

Fig. 10 a scheme illustrating interfaces of an engine for automatically generating executable code according to an exemplary embodiment of the invention.

Fig. 11 a scheme illustrating a method of generating new test software according to an exemplary embodiment of the invention.

Fig. 12A and Fig. 12B a detailed view of a part of the method of generating new test software of Fig. 11 according to an exemplary embodiment of the invention.

The illustration in the drawing is schematically.

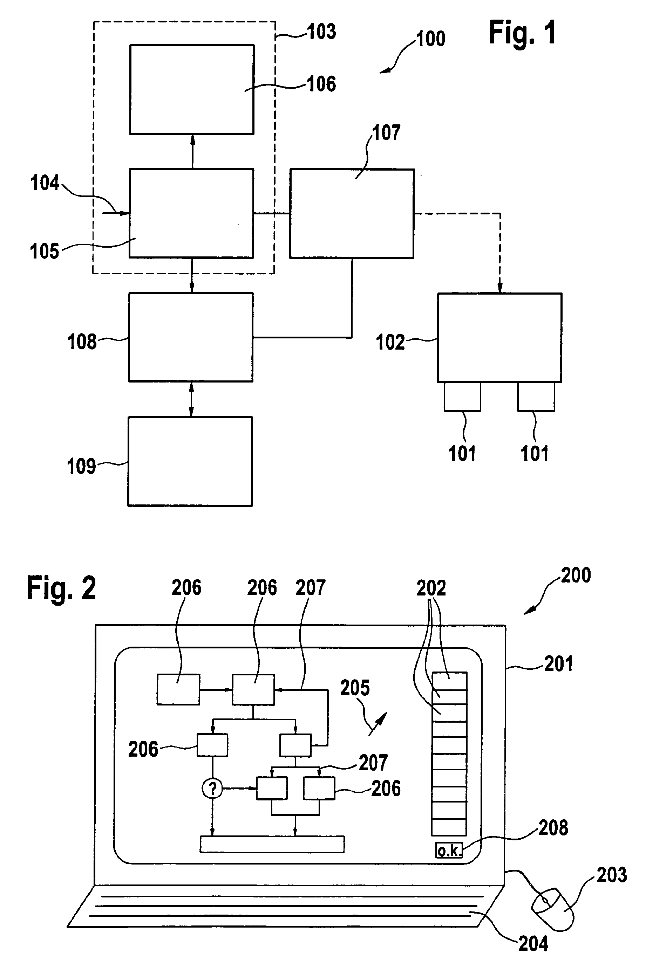

In the following, referring to Fig. 1, a data processing device 100 for automatically generating executable code according to an exemplary embodiment of the invention will be described.

The data processing device 100 is realized as a computer system and is capable to automatically generate executable control code for carrying out a test procedure for testing computer chips 101 as devices under test (DUT) in a test apparatus 102.

In other words, the generated code is control code which may be copied and stored in the test apparatus 102 which may then, during practical use, test the quality of integrated circuit chips 101. This measurement control code is generated in accordance with a user-defined description of the functionality to be provided by the measurement device 102, as will be described in the following.

The data processing device 100 comprises a graphical user interface 103 via which a programmer may input a user input 104 as the user-defined description of the test device 102 to be developed.

The graphical user interface 103 comprises an input unit 105 which may include a keypad and/or a computer mouse via which a programmer may input the user-defined description. The graphical user interface 103 further comprises a display device 106 which displays a user input 104 and a corresponding description to make it perceivable for a human user, so that a human user can, in an interactive manner, verify on the display device 106 whether his input or description is correct or needs modification or extension. Via the units 105, 106, the programmer may link functional blocks to define the functionality of the test device 102 to be developed.

When the user has completed defining the description, the user may press an "Okay button" or the like to inform the data processing device 100 that the description is finished.

This description may be stored in a suitable form in a storage unit 107. The storage unit 107 may be any kind of storage medium like a flash memory, a RAM memory, a ROM memory, an EEPROM, an FRAM memory, an SRAM memory, an MRAM memory, or the like. The storage unit 107 can also be realized as a compact memory card (for instance a flash card) or an USB stick, or any kind of replaceable cartridge that is removably inserted in the data processing device 100.

When a user presses a "generate" button via the graphical user interface 103, a generation unit 108 or software engine (a microprocessor or the like) is instructed to generate executable code in accordance with the input user-defined description and converts the user-defined description first into an XML file and the latter into executable program code.

For this purpose, the generation unit 108 is adapted to generate the executable code by combining, in accordance with the user-defined description of the functionality of the test device 102 to be developed, compiled code blocks. In this context, the generation unit 108 may retrieve suitable code blocks from a database 109 which may also be denoted as a program library and which comprises a collection of pre-compiled building blocks which may be connected or linked by the generation unit 108 to generate the directly executable code.

Each of the sequence of items according to the user description of the software to be developed may be assigned by the generation unit 108 with a particular of the compiled building blocks in the database unit 109 so that these pre-compiled code blocks may be put together to generate the executable code.

This executable code may be stored in the storage unit 107 or in a separate storage unit (not shown). Furthermore, this executable code which is control code for carrying out a test function in the test apparatus 102 for testing the devices under test 101 may be stored in a storage unit (not shown) of the test apparatus 102.

This can be accomplished by coupling devices 100 and 102 and by transmitting the code from device 100 to device 102, or by copying the executable code to a portable storage medium and inserting this portable storage medium in the device 102 for data transmission. The generated executable code to be copied in the test device 102 may be binary object code (similar to compiled C++ code) and is generated based on an XML file which has links to various pre-compiled building blocks. This XML file, in turn, has been created on the basis of the user-defined description.

The automatically generated code may be directly carried out by the test device 102 without prior compilation.

Thus, system 100 is capable of generating the control software for the test apparatus 102 in a (semi-)automatic manner.

The test device 102 may be realized on the basis of a correspondingly modified 93.000 SOC device of Agilent Technologies. With such a test device 102, the proper function of any device under test (DUT) 101 may be checked. Such a DUT 101 may be, for instance, a system on chip, an integrated circuit (IC), a central processing device (CPU), or any other product which shall be checked.

In the following, referring to Fig. 2, a graphical user interface 200 will be described showing a user-defined building block based description of an application according to an exemplary embodiment of the invention.

The graphical user interface 200 comprises a monitor 201 showing a plurality of control fields and/or buttons 202 which a user may control and selectively activate by using a computer mouse 203 and/or a keypad 204 with which the user may control a mouse pointer 205 on the display of the monitor 201.

The user may select, based on the control fields 202, a variety of building blocks 206 which the user may further combine and interrelate with the help of vectored arrows 207 or other connection elements defining the coupling between the different building blocks 206.

Each of the building blocks 206 corresponds to a particular sub-function or method step of a program code to be generated automatically. The user thus defines the sequence of the program to be generated by simply shifting the blocks 206 over the display device 201 in an intuitive manner. The user may further input parameters in each of the blocks which, for instance, may be related to control parameters for the device to be generated.

For instance, the user may specify one of the blocks 206 in a manner that it is specified that the measurement device to be developed is adapted to apply a voltage of 3V to pins 11 and 27 of a DUT 101 to be tested with the device 102.

In this manner, the user may simply describe the functionality intended to be realized on the monitor 201.

After having finished defining the description, the user may click on an "Okay" button 208. Consequently, the description displayed on the monitor 201 may be stored in a storage device. Furthermore, an engine of the system may automatically generate the executable source in accordance with the user-defined description.

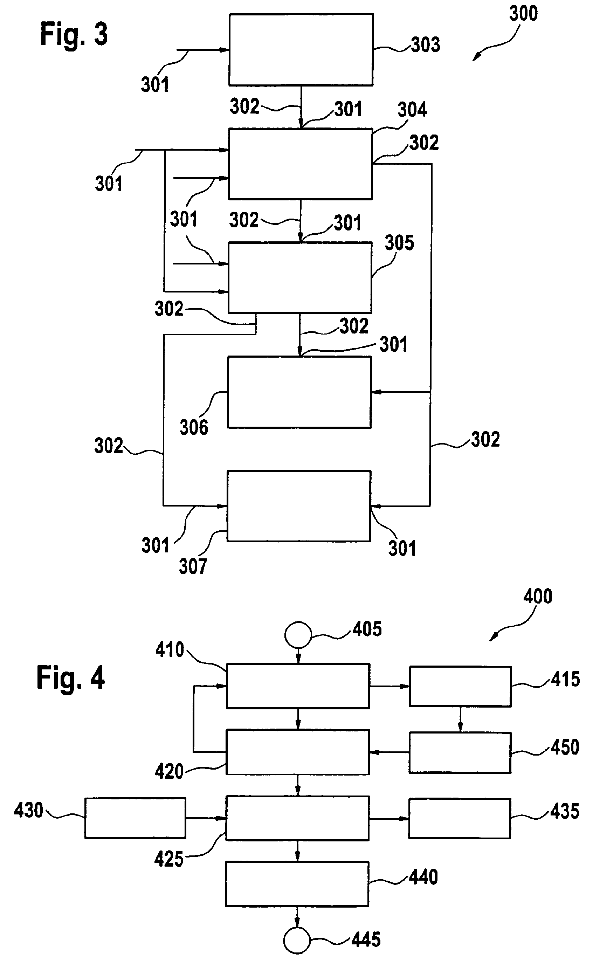

In the following, referring to Fig. 3, a user-defined building block based description 300 of an application according to an exemplary embodiment of the invention will be described.

The description 300 is constituted by a plurality of functional blocks 303 to 307. Each of the functional blocks 303 to 307 may be provided with input parameters 301 and symbolizes a particular functional element of a more complex measurement algorithm. Each of the functional blocks 303 to 307 may provide a respective output 302 which may be coupled to one or more of the other blocks 303 to 307.

The direction of the data flow and of the steps in accordance with the algorithm to be carried out is indicated in Fig. 3 by the direction of the arrows of components 301, 302.

A stimulate and measure block 303 symbolizes a program element which receives, as an input, parameters related to a voltage source, an analog digital converter and a plurality of measurement points as a basis for a measurement or test to be performed. In accordance with the definitions provided at the input 301 of the stimulate and measure block 303, a corresponding detection at the measurement points can be carried out. Thus, measurement data are acquired and may be provided at the output 302 of the stimulate and measure block 303.

The output generated by the stimulate and measure block 303 may be provided to a fill data model block 304. The fill data model block 304 may receive, at its inputs 301, the measurement values and parameters related to a data model, for instance a procedure according to which measured data shall be compared to target values. The fill data model block 304 may analyse these inputs.

An analysis block 305 also may receive a data model and check criteria (for instance "threshold exceeded?") and carries out a further analysis.

The results of the functions of the blocks 303 to 305 may be provided to a storage block 306 adapted to store the results in a predefined format, and to a display block 307 for conditioning the results for display on a display device.

According to one exemplary embodiment of the invention, a programmer simply has to combine the blocks in the manner as shown in Fig. 3. Then, executable code for realizing the function of the description 300 is automatically generated and can be directly stored in a device. It is not necessary that the entire software related to the description 300 is manually programmed by a human developer. In contrast to this, the basic building blocks 303 to 307 are realized by pre-programmed and pre-compiled standard blocks which are at least partially application-independent and which, when receiving the respective inputs 301, are capable of generating the respective outputs 302.

In the following, referring to **Fig. 4**, a flow chart 400 of a method of automatically generating executable code according to an exemplary embodiment of the invention will be described.

At a step 405, the execution of the method starts.

At a method step 410, input data is received from a user interface via which a user defines a sequence of a program for which executable code shall be automatically generated.

The input received in step 410 may be stored in a step 415.

Furthermore, in a check step 420, the input received in step 410 may be checked concerning the question if all the building blocks have been correctly combined without logical contradictions. In case that the check step 420 yields inconsistencies in the input, the input step 410 may be repeated.

In case the check is successful and the logical connections of the building blocks according to the user-defined input 410 are accepted as valid, the executable program code is generated automatically in a step 425. For this purpose, in a step 430, database information may be received, wherein each of the user-defined building blocks is assigned to a corresponding compiled software block stored in the database.

In a step 435, the generated executable code is stored in a memory device.

In a step 440, the generated executable code is implemented in a measurement device.

At a step 445, the execution of the method ends.

However, in case that a user wishes to modify an already existent description, it is possible to modify the description retrieved from the storage device in a method step 450. Again, the method may be continued in step 420 and may check whether the modified description comprises logical inconsistencies or not.

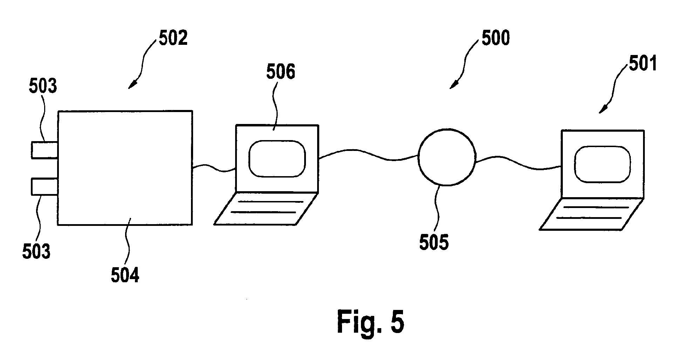

In the following, referring to **Fig. 5**, a network 500 of a data processing device 501 for automatically generating executable code and a remotely located controllable IC test device 502 according to an exemplary embodiment of the invention will be described.

The network 500 is formed by the data processing device 501 as a first network node. The data processing device 501 may be constituted as shown in Fig. 1 and is capable of automatically generating executable code for performing a test procedure for testing IC chips 503 by means of a IC test device 502 in accordance with a user-defined description.

After having generated such executable source code, the latter is transferred to the IC test device 502 as a second network node of the network 500.

The data processing device 501 may be located at a site of a manufacturer of the IC test device 502. The IC test device 502 may be located remote from the data processing device 501 at a client's site.

The IC test device 502 may be composed of a test unit 504 and a control computer 506 connected thereto. The control computer 506 may control the test unit 504 to carry out test routines to test the IC chips 503 mounted on the test unit 504.

The data processing device 501 and the IC test device 502 may be connected via the internet 505. More generally, the data processing device 501 and the IC test device 502 may be connected to communicate via at least one of a bus, a Local Area Network (LAN), a Control Area Network (CAN), HPIB (Hewlett Packard Interface Bus) or RS232. The communication may be performed via any desired wireless or wired network.

During operating the test device 502 at the client site, an error may occur, or a client may have the wish to modify the performance of the test device 502.

Conventionally, it would be necessary to send an engineer from the manufacturer site to the client site to find the origin of the error in the software control code for controlling the test device 502. Then, the engineer had to manually correct, modify or extent the software code to provide the service desired by the client. This modified software source code then had to be compiled again to generate executable code.

According to the system of the invention, it is possible that the engineer solves the problem at the manufacturer site. For this purpose, the data processing device 501 simply requests the code implemented in the test device 502, preferably in the form of the user-defined description or in the form of an XML code. Then, the desired modifications or corrections may be carried out on the level of the description, for instance by modifying or exchanging building blocks, the coupling scheme and/or inputs. The updated executable control code for controlling the IC test device 502 in accordance with the client's requirements may then be generated automatically again by pressing the "Generate" button at the data processing device 501.

Via the internet 505, the modified executable code may then be transferred to the test device 502 where it may be stored and used to control the test unit 504, without prior compilation.

Thus, a diagnosis and monitoring of the operation of a remotely located application is possible, as well as the fault repair, by simply modifying the control code on the level of the description.

In the following, an XML file will be presented as an exemplary embodiment for a formalized description serving as a basis for generating automatically generated code which may directly be executed. At several positions, the XML file comprises links to pre-compiled code blocks to fulfil a particularly assigned function. The XML file defines class names, functions of blocks to be bundled, parameters, and links to compiled building blocks which may be stored in a linked shared library. By such an XML file, pre-compiled building blocks and parameters are bound together to form executable code.

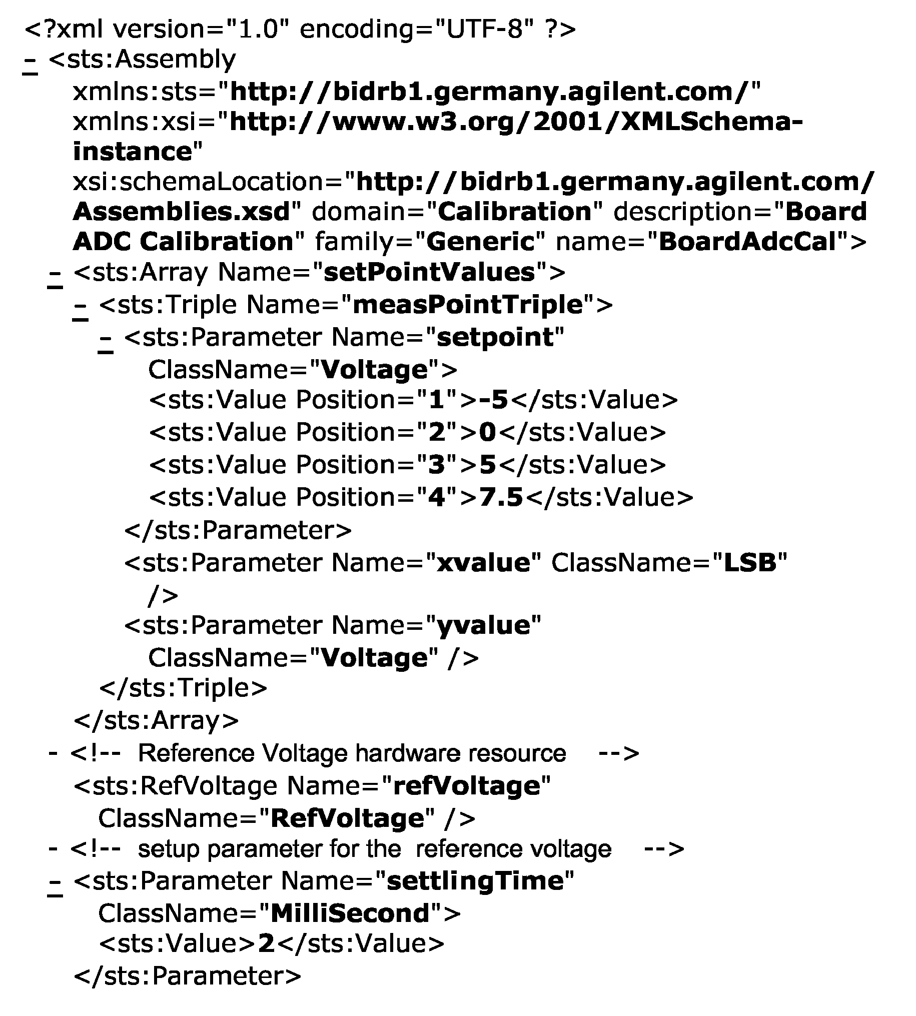

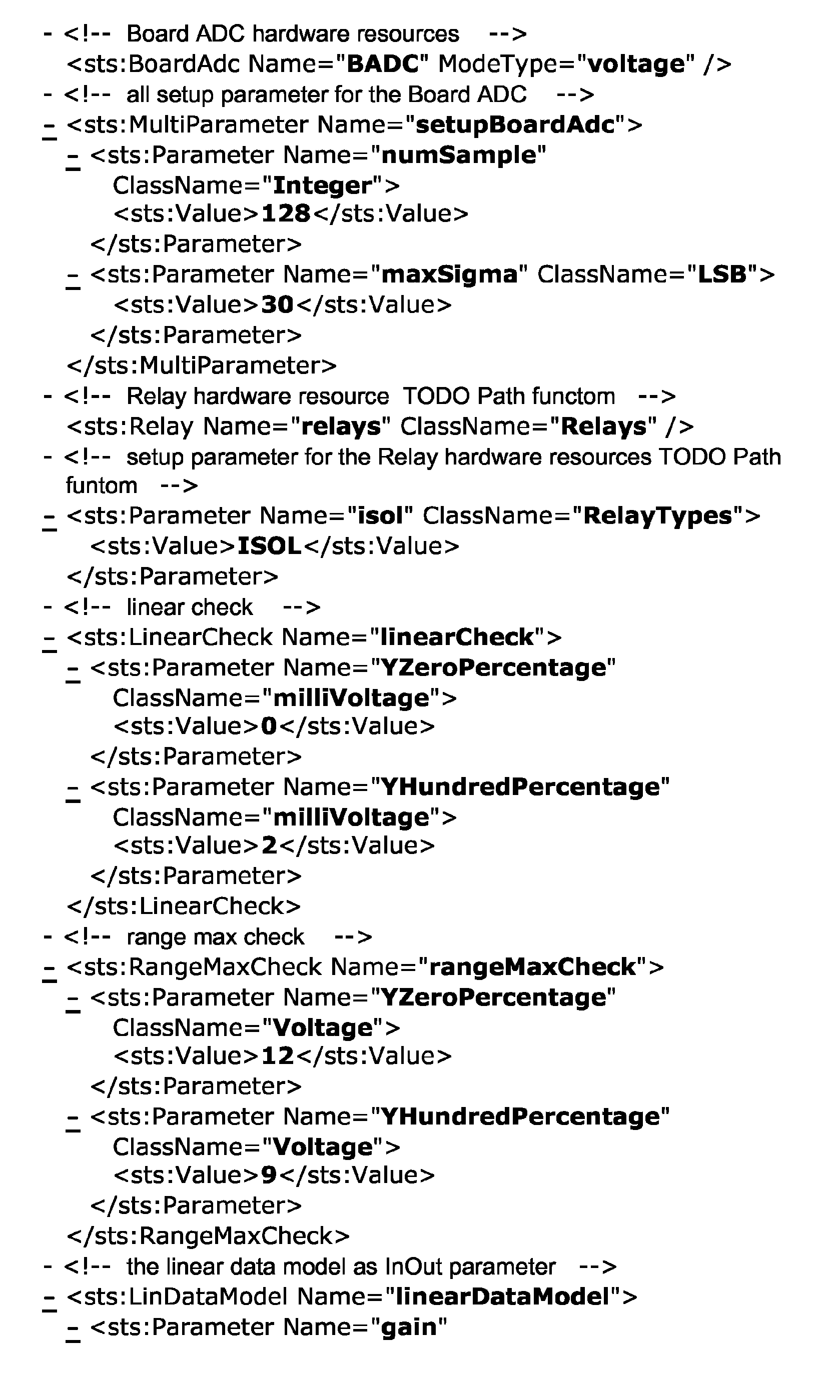

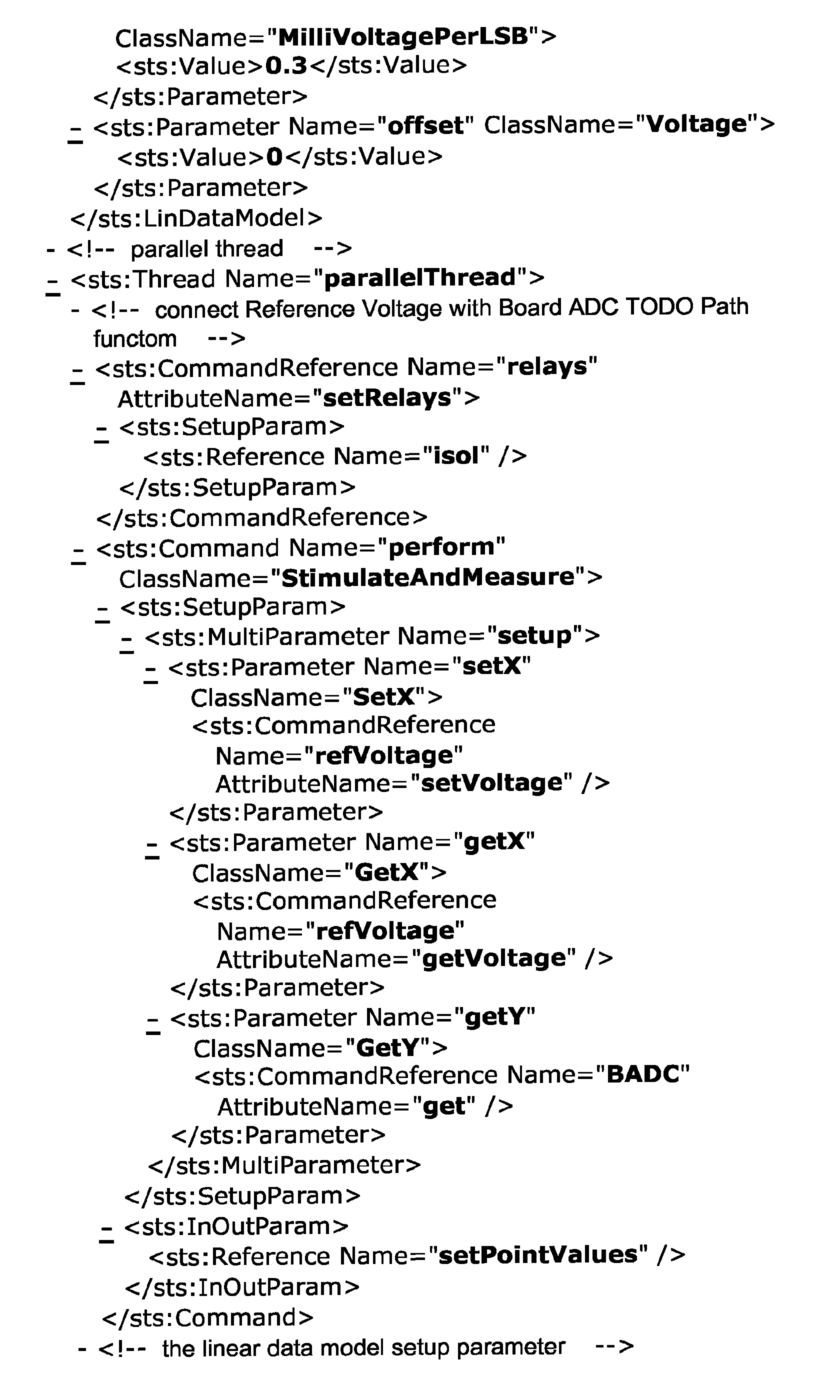

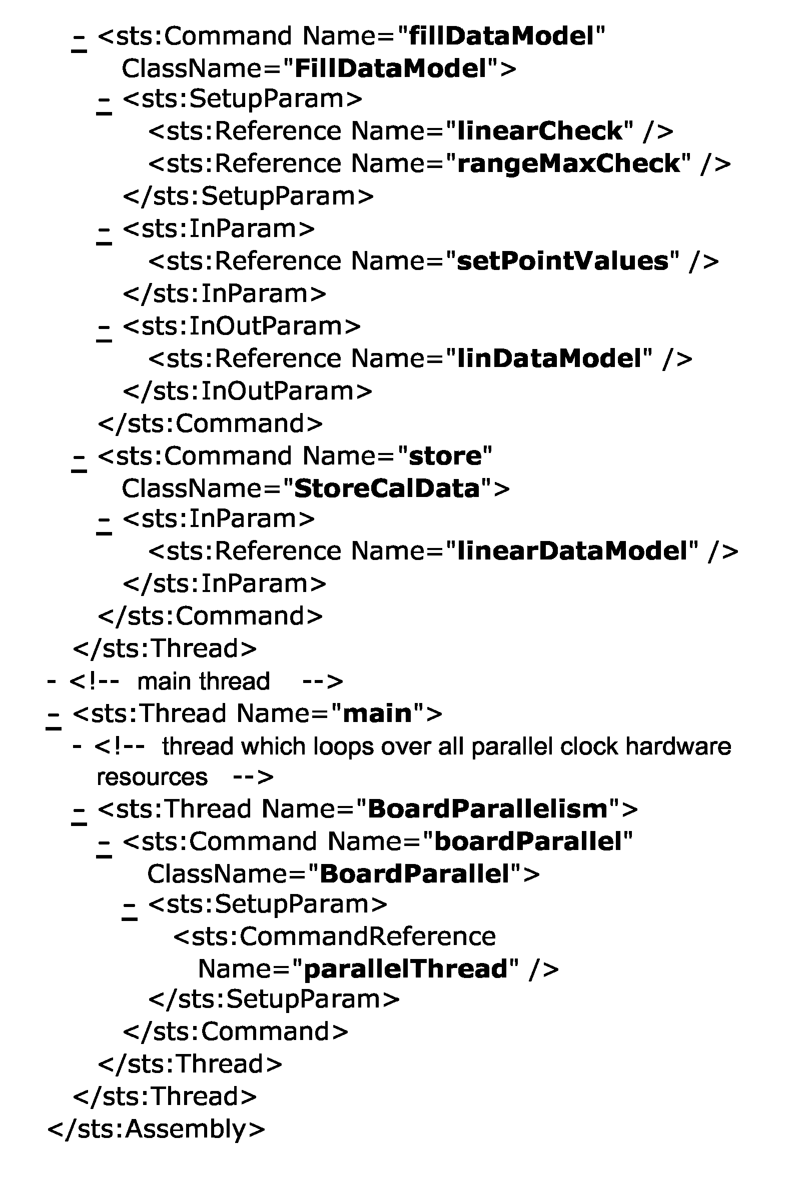

The exemplary XML file plotted above serves as a basis for executable software code which performs a calibration routine for calibrating a Board ADC (analog to digital converter) of a test device. As can be taken from the XML code, at several positions links to compiled software building blocks are provided, along with definitions of parameters and other specifications as to how the various pre-compiled blocks are to be connected or coupled. The different compiled building blocks are available in the form of translated C++ files and are coupled to fulfill the desired function.

The XML file may be interpreted by an engine of the generation unit which then combines the different blocks and parameters in accordance with the description as defined by the XML file. Without a compilation procedure, executable software code is thus generated by the engine which may directly read in the test device to perform the calibration of the Board ADC.

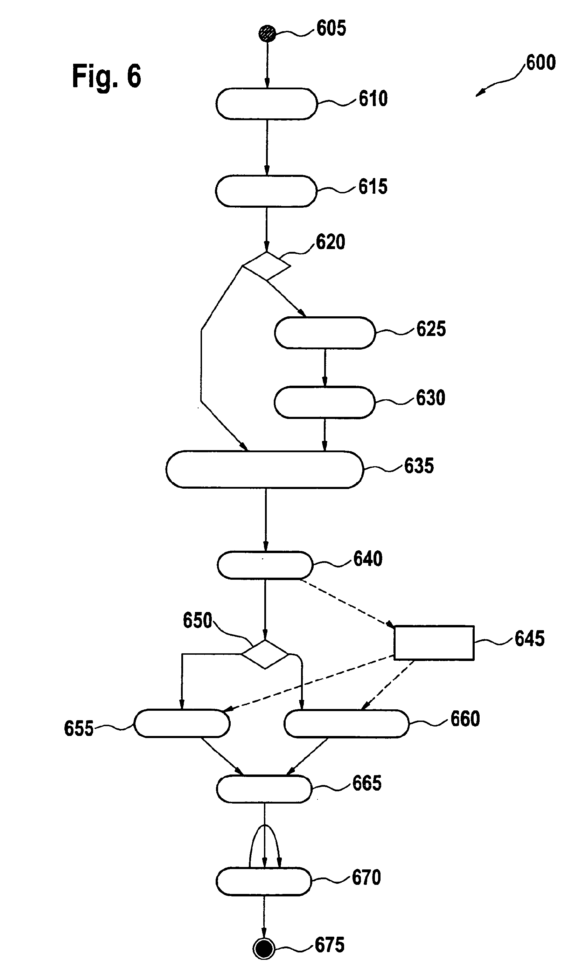

In the following, referring to **Fig. 6**, a flow chart 600 will be described illustrating a development of a maintenance test according to an exemplary embodiment of the invention.

The flow chart 600 illustrates what a developer has to do in order to develop software for a maintenance test according to an exemplary embodiment of the invention.

In a step 605, the operation starts.

In a step 610, an identify algorithm step is performed. Here, the developer has to identify the basic algorithm (e.g. binary search, lineary search, edge search, ect.) she or he wants to use in order to implement a new maintenance test.

In a step 615, a gather parameter step is performed. This relates to the "parameters" that are retrieved from the hardware design and that are part of the result of a hardware environmental test.

In a query 620, a completeness check is performed. Here, the developer has to decide if all the "basic algorithms" (functoms) she or he needs in order to perform his task are available.

If the query 620 yields the result that the parameters are complete, the operation is continued in a build maintenance test step 635 described below.

If the query 620 yields the result that the parameters are not complete, the operation is continued in an identify new functom step 625. In the identify newfunctom step 625, the developer has to design and implement new generic building blocks (functoms) in order to implement the maintenance test. In other words, a new software building block has to be programmed and compiled and may be added to a shared library storing a set of pre-compiled building blocks.

In a step 630, an implement new functom step is performed. This includes the actual implementation of a new functom.

Then, the operation continues in the build maintenance test step 635 using a visual maintenance test designer. This includes the implementation of a diagnostic test or calibration step, including decisions like which part of the algorithm can be performed in parallel, which part of the algorithm has to be deployed centrally (workstation), and/or which portion has to be deployed locally (embedded in the hardware).

In a step 640, an XML description is generated. After having designed a new maintenance step, the developer has to generate a XML file, that holds the actual description of the maintenance test in a formalized manner.

In a step 645, the generated XML description is archived, for instance stored on a storage device.

In a query 650, a deployment check is performed. In order to perform the deployment, the developer has to decide, which portion of his algorithm has to be deployed on the workstation and which portion has to be deployed within the hardware (local intelligence).

If the query 650 yields the result that the deployment should be on a workstation, a deployment on a workstation is done in a step 655. This is the "standard' activity for deploying a maintenance test.

If the query 650 yields the result that the deployment should be locally, a deployment is done at local intelligence in a step 660. In order to deploy part of a maintenance test within the hardware, there has to be a communication mechanism between the workstation and the hardware itself and the actual engine, that is responsible for binding and executing a maintenance test has to be plattform independent.

In each of steps 655 and 660, an access to the XML file 645 is possible.

In a step 665, a check for completeness is performed. Here, it may be checked if all the parts needed to run the maintenance test are available and it may be checked if the parameters defined by the user meet the specification of the individual functoms.

In a step 670, a parameter optimization is performed. This includes a fine tuning of the algorithm in order to maximize performance, in order to maximize the overall hardware performance of the system.

In a step 675, the operation ends and the development of the maintenance test is finished.

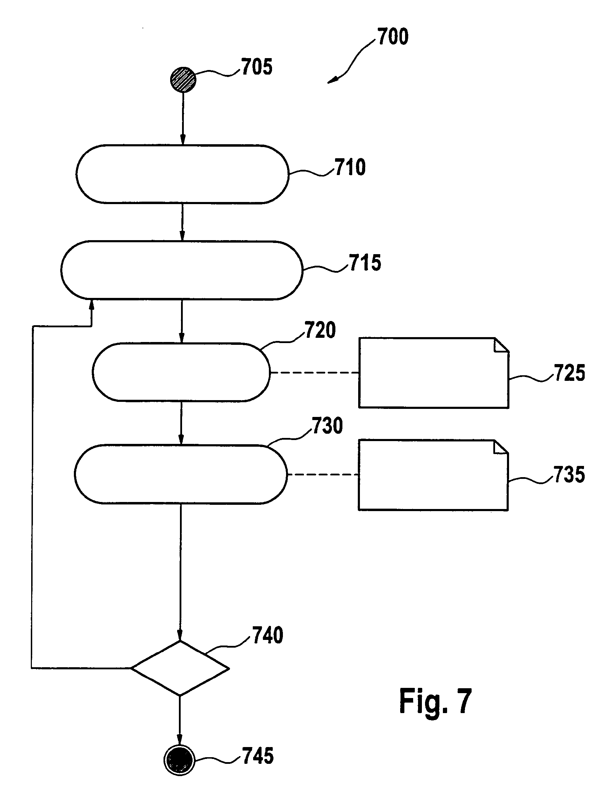

In the following, referring to **Fig. 7**, a flow chart 700 will be described illustrating a development of a new hardware according to an exemplary embodiment of the invention.

In a step 705, the operation starts.

In a step 710, requirements for a new hardware are gathered. This may include to aquire the requirement for a new piece of hardware from marketing.

In a step 715, the hardware is designed, implemented and, if desired or necessary, modified. After knowing all the requirements, the hardware designer has to design (of modify) a new (or an old) piece of hardware.

In a step 720, the new hardware is turned on.

Details are shown schemetically in a step 725. In this context, the hardware specification may be taken. The hardware developer has to take the requirements defined by marketing, in order to design and implement a new piece of hardware. She or he also has to take into account environmental requirements. Then, necessary maintenance tests are utilized. The developer might use additional functionality in order to cover the overall hardware performance. Therefore, the developer has to design new or re-use existing maintenance tests. After that, the hardware is verified. During environmental test and bench test, the hardware designer takes his "new" maintenance test and verfies the functionality of the hardware. Then, the hardware parameters are adapted or the hardware is modified. Last but not least, the developer has to take the result gathered by the utilization of the maintenance tests and adapts either the hardware design or adjusts the paramters in order to meet the specification for this certain piece of hardware.

In a step 730, a maintenance test is developed. The hardware designer needs to develop only those maintenance tests that are needed to turn on the hardware and pass the environmental test. The hope is, that due to the technology used, it may be possible to re-use this test for the actual system release. Details are performed in a step 735 which equals to the flow chart 600 described above.

In a query 740, it is checked if the hardware is in the specification.

If no, the whole cycle is repeated again, that is to say the method jumps to step 715.

If yes, the operation ends in a step 745 and the development of the new hardware is finished.

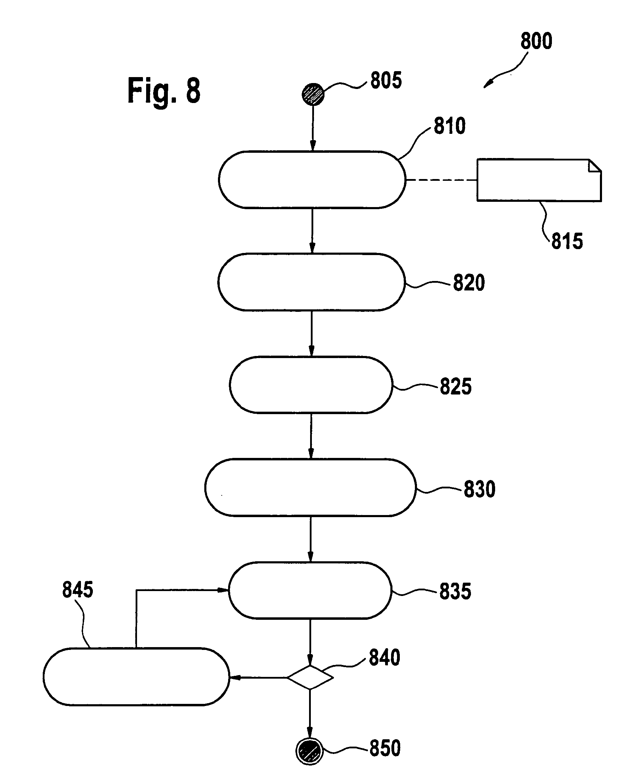

In the following, referring to **Fig. 8**, a flow chart 800 will be described illustrating a performance of an engine related to a maintenance system according to an exemplary embodiment of the invention.

Fig. 8 describes what may happen in an engine generating executable code according to an exemplary embodiment of the invention.

In a step 805, the operation starts.

In a step 810, the system is powered on. Details are performed in a step 815 which equals to the flow chart 900 described below.

In a step 820, the calibration specification is adapted to predefined requirements. The goal of this activitiy is to "remove" calibration steps or reduce the amount of time for the calibration, by reducing the overall calibration flow to the parts that are needed in order to need the customers requirements.

In a step 825, the maintenance flow is set.

In a step 830, the maintenance flow is optimized in order to optimize the mean time to repair (MTTR).

In a step 835, the actual maintenance step is triggered. This action is performed by the hardware maintenance system.

In a query 840, it is checked if all steps are performed. In other words, it is checked whether all test building the actual maintenance flow had been performed.

If no, the next maintenance step is got in a step 845. This includes to get the next maintenance test that needs to be performed in order to perform (e.g.) a system calibration. Then, the method jumps back to step 835.

If yes, the operation ends in a step 850.

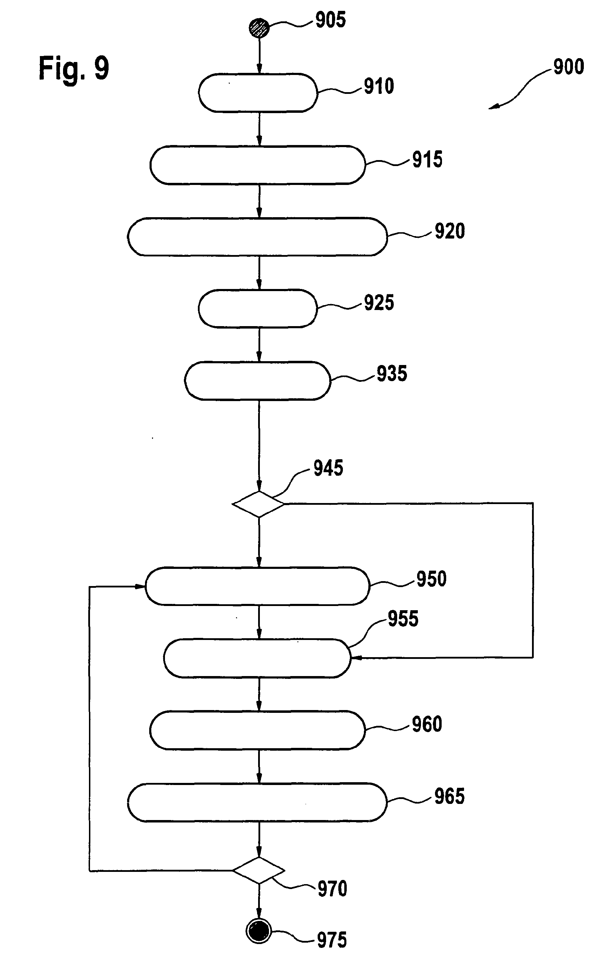

In the following, referring to **Fig. 9**, a flow chart 900 will be described illustrating the performance of the engine related to a maintenance system according to the exemplary embodiment of the invention shown in Fig.8.

In a step 905, the operation starts. The actor invokes "start maintenance system" in the hardware layer alternative flow: The actor starts maintenance "communication is not possible".

In a step 910, an internal initialization is performed. The hardware maintenance system performs "internal initialization" (e.g. loading and initializing its components).

In a step 915, the description is read concerning aspects defining overall system behaviour. This activity defines topics like logging, tracing, error handling or the like.

In a step 920, the description is read concerning physical magnitudes used in the current domain. This activity defines topics like voltage values, current values, etc.

In a step 925, functoms are loaded. Assuming that no hardware specific functoms are present, the generic functoms may be loaded at this point in time.

In a step 935, deployed hardware is discovered. This activity is handled by the power on subsystem of the tester. It is divided in several substeps (e.g. start communcition). The maintenance subsystem checks which parts of the test equipment are available (including unknown boards and revisions).

In a query 945 it is checked whether hardware is available.

If no, the method continues in a step 955 explained below.

If yes, the method continues in a step 950 in which hardware specific descriptions are loaded for the maintenance test. Here, all the description is read which is necessary to build the maintenance test for a certain hardware revision, utilizing the XML-file build by the graphical maintenance test builder.

In a step 955, maintenance test elements are determined. The hardware maintenance system determines the maintenance test elements for the available test equipment. If no hardware is detected, then the hardware maintenance system determines the low level maintenance test elements.

In a step 960, the binding and registration of maintenance tests are performed. After having read the description, the functoms are taken and "bound" to a certain test. On top of that, one has also to make sure that all the parameters needed by a certain functom are available and that the fit to the actual parameter list is ensured.

In a step 965, dependencies of the maintenance test are registered within the rule based engine. If a maintenance test is build, it has to be registered within the DMRB - VM, and the dependencies of this test are registered within a rule based engine, that is responsible to generate the overall maintenance flow.

In a query 970, it is decided whether all hardware revisions are covered.

If no, the method goes back to step 950.

If yes, the method ends in a step 975.

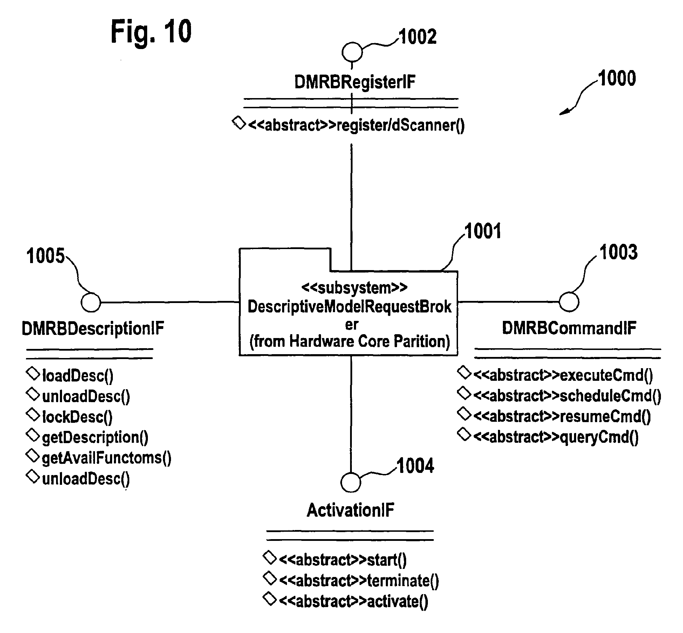

In the following, referring to **Fig. 10**, a scheme 1000 illustrating interfaces of an engine 1001 for automatically generating executable code according to an exemplary embodiment of the invention will be explained.

Fig. 10 shows interfaces 1002 to 1005 via which an external access or control of the engine 1001 is possible.

A first interface 1002 allows a dynamic scan of the hardware being available. The first interface 1002 may further allow to register magnitudes, that is to say to define or specify parameters like current or voltage values for a test to be defined.

A second interface 1003 allows to start a particular test (executeCmd), to query which tests are loaded (queryCmd), to pause and later continue a particular test (resumeCmd), and to specify an access schedule in a scenario in which different systems access the same test (scheduleCmd).

A third interface 1004 allows to activate modes in the system when the program is started.

A fourth interface 1005 allows to access or process an XML file as a formalized description of a program to be generated, for instance to load the XML file, etc.

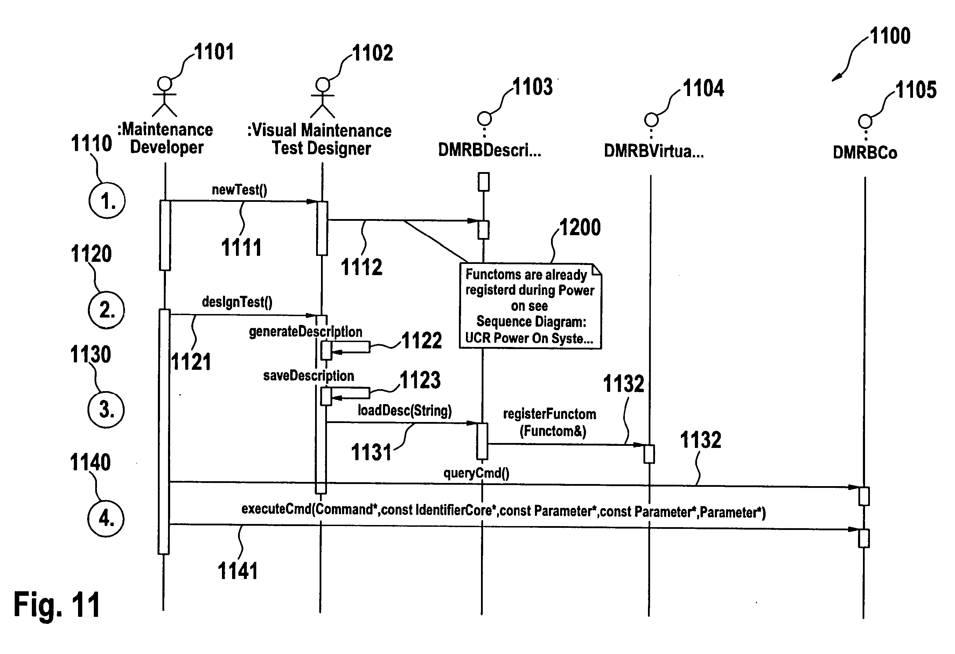

In the following, referring to **Fig. 11** a scheme 1100 illustrating a method of generating new test software according to an exemplary embodiment of the invention will be explained.

The scheme 1100 explains the interaction of actors 1101, 1102 and interfaces 1103 to 1105 which interaction or co-function takes places when carrying out the method.

A first actor 1101 is a human being or maintenance developer developing a new test. A second actor 1102 is a (graphical) user interface via which the first actor 1101 may develop the new test in an intuitive manner. The interface 1105 corresponds to the second interface 1003 shown in Fig. 10. The interface 1103 corresponds to the fourth interface 1005 shown in Fig. 10.

The method which will be described subsequently referring to Fig. 11 may, of course, be repeated several times to generate more complex test sequences. Thus, the process is iterative. In order to maximize the system performance, the designer 1101 may go through design, deployment, etc, multiple times.

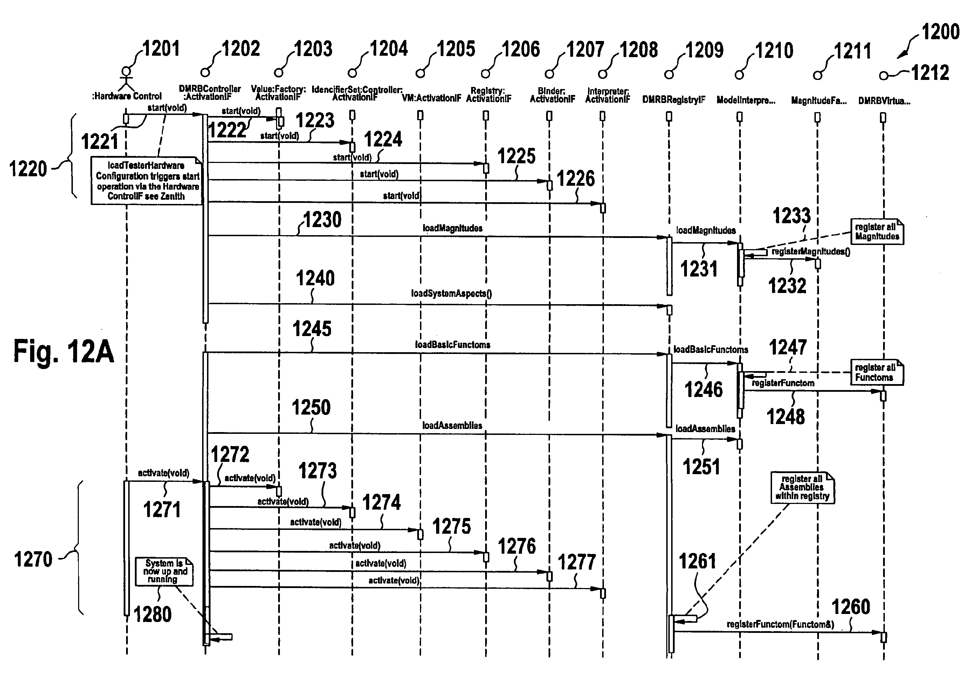

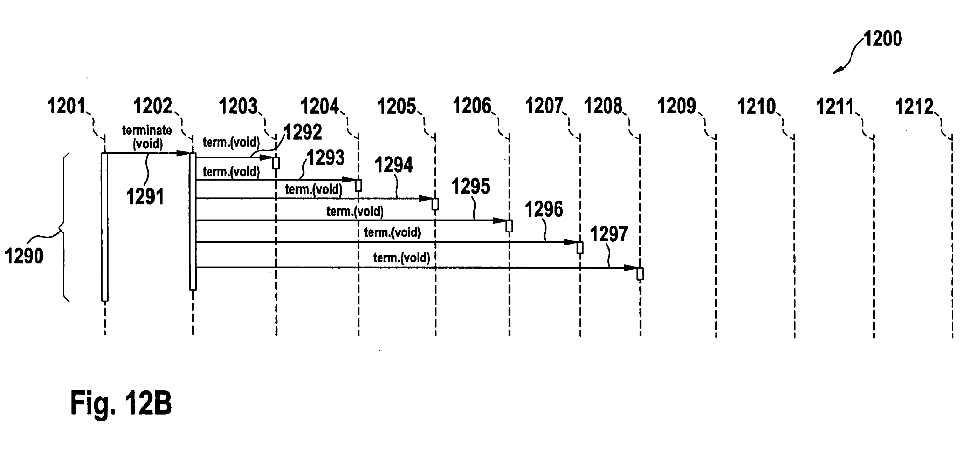

In a first method step 1110, the new test is initialized. In this context, the first actor 1101 defines a new test by accessing the second actor 1102 in a step 1111. The second actor 1102 accesses the interface 1103 in a step 1112. In the frame of this procedure, the second actor 1102 uses functoms as will be described below referring to the scheme 1200 depicted in Fig. 12A, Fig. 12B.

In a second method step 1120, the new test is developed, using functoms (that is to say pre-compiled building blocks). For this purpose, the first actor 1101 designs the test by accessing the second actor 1102 in a step 1121. The second actor 1102 then generates the description (that is an XML file) of the test to be designed in a step 1122 and saves the description in a step 1123.

In a third method step 1130, the new test is deployed. Thus, the second actor 1102 accesses the interface 1103 in a step 1131 and loads the functoms in accordance with the previously generated description. In a step 1132, the interface 1103 communicates with the interface 1104 and registers the functoms or basic building blocks. Then, the first actor 1101 sends a query to the interface 1105.

In a fourth method step 1141, the new test is validated. In other words, the first actor 1101 sends an execute command to the interface 1105 to validate or perform the test.

In the following, referring to Fig. 12A and Fig. 12B, a detailed view of a part of the method of generating new test software of Fig. 11 according to an exemplary embodiment of the invention will be explained on the basis of a scheme 1200.

The scheme 1200 illustrates the interaction of a hardware controller 1201 as a human actor with a plurality of interfaces 1202 to 1212.

Next, **Fig. 12A** will be explained.

In a first sequence 1220 of method steps, a start command 1221 is sent from the hardware controller 1201 to the interface 1202, and from there a plurality of start commands 1222 to 1226 are sent to interfaces 1203, 1204, 1206 to 1208.

In a method step 1230, the interface 1202 sends a command to the interface 1209 to load magnitudes. "Magnitudes" may particularly denote mathematical basic units defining basic building blocks with parameters (for instance voltage or current values). In method steps 1231 to 1233, the interface 1209 may communicate with interfaces 1210 to 1212 to register the magnitudes.

In a method step 1240, the interface 1202 sends a command to the interface 1209 to load system aspects. "System aspects" may particularly denote recurring system-specific units which are repeatedly called (for instance to open all relays for an initialization).

In a method step 1245, the interface 1202 sends a command to the interface 1209 to load basic functoms. In method steps 1246 to 1248, the interface 1209 may communicate with interfaces 1210, 1212 to load and register the functoms.

In a method step 1250, the interface 1202 sends a command to the interface 1209 to load assemblies. In a method step 1251, the interface 1209 may communicate with interfaces 1210, 1212 to load the assemblies. In other words, the executable code is synthesized from the retrieved functoms and the defined parameters specifying the functoms, and by combining the functoms in accordance with a functionality to be provided.

By a communication between interfaces 1209 and 1212 in method steps 1260, 1261, the assemblies and functoms are registered.

In a second sequence 1270 of method steps, an activate command 1271 is sent from the hardware controller 1201 to the interface 1202, and from there a plurality of activate commands 1272 to 1277 are sent to interfaces 1203 to 1208. Therefore, the subsystems are activated.

Consequently, an operation state 1280 is achieved in which the system is running and the test may be carried out.

The end of Fig. 12A is connected with the beginning of **Fig. 12B** which illustrated how the process continues.

In a third sequence 1290 of method steps, a terminate command 1291 is sent from the hardware controller 1201 to the interface 1202, and from there a plurality of terminate commands 1292 to 1297 are sent to interfaces 1203 to 1208. Here, the method ends.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A data processing device (100) for automatically generating executable code for performing an application in accordance with a user-defined description (300) of the application, wherein the data processing device (100) comprises
a generation unit (108) which is adapted to generate the code by combining, in accordance with the user-defined description (300) of the application, compiled code blocks.

2. The device (100) of claim 1,
wherein the generation unit (108) is adapted to generate the code by forming a sequence of the compiled code blocks.

3. The device (100) of claim 1 or any one of the above claims,
wherein the generation unit (108) is adapted to generate the code based on a sequence of linked items (303 to 307) by means of which a user defines a sequence of compiled code blocks, wherein each of the items (303 to 307) corresponds to an assigned of the compiled code blocks.

4. The device (100) of claim 3,
wherein each of the items (303 to 307) has at least one input (301), wherein each of the at least one input (301) is providable with data and/or is coupled with an output (302) of another one of the items (303 to 307).

5. The device (100) of claim 3 or any one of the above claims,
wherein each of the items (303 to 307) has at least one output (302), wherein each of the at least one output (302) is capable of providing data and/or is coupled with an input (301) of another one of the items (303 to 307).

6. The device (100) of claim 1 or any one of the above claims,
comprising a user interface (103) adapted to receive a user input (104) as the
user-defined description (300) of the application.

7. The device (100) of claim 6,
wherein the user interface (103) is a graphical user interface.

8. The device (100) of claim 6 or any one of the above claims,
wherein the user interface (103) is adapted to receive the user input (104) in a language and/or in a view which is understandable for a human being.

9. The device (100) of claim 1 or any one of the above claims,
wherein the generation unit (108) is adapted to generate, based on the user-defined description, a formalized description comprising links to the compiled code blocks, wherein the executable code is generated from the formalized description.

10. The device (100) of claim 9,
wherein the formalized description is a file in Extensible Markup Language.

11. The device (100) of claim 1,
wherein the executable code is object code.

12. The device (100) of claim 1 or any one of the above claims,
wherein the generation unit (108) is adapted to generate control code for controlling an apparatus (102) capable of performing the application.

13. The device (100) of claim 1 or any one of the above claims,
wherein the generation unit (108) is adapted to generate control code for controlling a measurement apparatus (102) capable of performing a measurement functionality as the application.

14. The device (100) of claim 12,
wherein the measurement apparatus is at least one of the group consisting of a test device (102) for testing a device under test (101), a measurement device for performing a measurement in a coupled measurement environment, a sensor device, a device for chemical, biological and/or pharmaceutical analysis, a fluid separation system adapted for separating compounds of a fluid, and a liquid chromatography device.

15. The device (100) of claim 1 or any one of the above claims, comprising
a modification unit for modifying the user-defined description (300) and/or the formalized description to modify the application.

16. The device (100) of claim 1 or any one of the above claims,
comprising a or adapted to access a library unit (109) storing a plurality of compiled code blocks, wherein each of the compiled code blocks is executable to perform an assigned function.

17. A method (400) of automatically generating executable code for performing an application in accordance with a user-defined description (300) of the application, wherein the method (400) comprises the step of
generating (425) the code by combining, in accordance with the user-defined description (300) of the application, compiled code blocks.

18. A software program or product, preferably stored on a data carrier, for controlling the step of claim 17, when executed in a data processing unit of a data processing device (100).
